(19) Europäisches Patentamt
European Patent Office
Office européen des brevets

(11) Veröffentlichungsnummer: **0 482 517 A2**

(12) # EUROPÄISCHE PATENTANMELDUNG

(21) Anmeldenummer: **91117780.6**

(22) Anmeldetag: **18.10.91**

(51) Int. Cl.5: **C08F 8/28**, C08F 8/12, C08F 283/00, C08G 81/02, //(C08F283/00,18:08)

(30) Priorität: **24.10.90 DE 4033775**

(43) Veröffentlichungstag der Anmeldung: **29.04.92 Patentblatt 92/18**

(84) Benannte Vertragsstaaten: **AT BE CH DE ES FR GB IT LI NL SE**

(71) Anmelder: **HOECHST AKTIENGESELLSCHAFT**
**Postfach 80 03 20**
**W-6230 Frankfurt am Main 80(DE)**

(72) Erfinder: **Gutweiler, Matthias, Dr.**
**Hintergasse 2**
**W-6204 Taunusstein 4(DE)**
Erfinder: **Kroggel, Matthias, Dr.**
**Am Flachsland 15**
**W-6233 Kelkheim(DE)**

(54) **Pfropfpolyvinylacetale mit Acetalgruppen aus veräthertem omega-Hydroxy(poly)alkoxyalkanalen, Verfahren zu ihrer Herstellung und ihre Verwendung.**

(57) Es werden polymere Acetale von auf Polyalkylenoxidpfropfgrundlagen oder auf Polyurethanpfropfgrundlagen aufgepfropften Polyvinylalkoholen beschrieben, die Acetalgruppen aus verätherten ω-Hydroxy(poly)-alkoxyalkanalen der Formel (I) enthalten, sowie Verfahren zu ihrer Herstellung durch Acetalisierung entsprechender Pfropfpolyvinylalkohole.

Die erfindungsgemäßen polymeren Acetale sind innerlich weichgemachte und im allgemeinen in fester Form erhältliche Polymerisate, die ohne äußere Weichmacher thermoplastisch zu Folien, Formkörpern oder Beschichtungen verarbeitet werden können. Auch Mischacetale mit anderen Aldehyden sind herstellbar und ermöglichen breite Eigenschaftsvarianten u.a. der Löslichkeiten in Wasser oder in organischen Lösungsmitteln. Die Verarbeitung bzw. Anwendung erfindungsgemäßer polymerer Acetale kann in Substanz, z.B. aus der Schmelze, oder als organische oder wäßrige Lösungen oder als wäßrige Dispersionen erfolgen.

Das breit gefächerte Löslichkeitsspektrum, die vergleichsweise zu Polyvinylbutyral entscheidend herabgesetzten Glastemperaturen, die thermoplastische Verarbeitbarkeit ohne externe Weichmacher, die Fremdvernetzbarkeit, das gute Adhesiv- und Haftungsvermögen auf diversen festen Materialien, das korrosionsneutrale Verhalten auf Metallen und das Dispergiervermögen in wäßrigen Medien eröffnen den erfindungsgemäßen polymeren Acetalen ein weites technisches Anwendungsgebiet, insbesondere z.B. als Bindemittel in organischen oder wäßrigen Lösungen bzw. Dispersionen oder in schmelzflüssig anzuwendenden Produkten, vorzugsweise in Lacken, Beschichtungsmassen, Klebstoffen, Dispergiermitteln, Pigmentbindemitteln, Druckfarben, Keramikgrünfolien, Schlichtemitteln, Faserbindemitteln, Papier, Photodruckplatten, Photoresistmaterial, sowie als Formkörper und transparente Zwischenlagenfolien für Verbundgläser.

EP 0 482 517 A2

Die Erfindung betrifft Pfropfpolyvinylacetale auf Polyalkoxypfropfgrundlagen oder auf Polyurethanpfropfgrundlagen, die Acetalgruppen aus verätherten ω-Hydroxy(poly)alkoxyalkanalen der Formel (I) enthalten und durch Acetalisierung von Pfropfpolyvinylalkoholen mit verätherten ω-Hydroxy(poly)alkoxyalkanalen der Formel (I) und gegebenenfalls weiteren Aldehyden nach bekannten Methoden herstellbar sind. Verwendung der Pfropfpolyvinylacetale als Bindemittel in lösungsmittelhaltigen oder in wäßrigen Klebstoffen und Lacken, als Beschichtungsmittel, als Folien und Formkörper, die ohne Weichmacherzusatz thermoplastisch herstellbar sind, als Dispergiermittel in wäßrigen Systemen, als Textilhilfsmittel. Gegenstand der Erfindung sind u.a. auch alle in den Patentansprüchen geoffenbarten und beanspruchten Gegenstände, Produkt- und Verfahrensmerkmale und Zusammensetzungen.

Polyvinylacetale, insbesondere Polyvinylbutyrale, und deren Herstellung aus Polyvinylalkoholen und Aldehyden sind bekannt. Polyvinylbutyrale finden bekanntlich vielseitige technische Verwendung, beispielsweise als Bindemittel zur Herstellung von Grundierungen und Lacken, als Klebstoffe und Beschichtungsmittel sowie als Folien für die Herstellung von Verbundgläsern.

Wegen des hohen Schmelzpunktes und der auch bei hohen Temperaturen geringen Fließfähigkeit von Polyvinylbutyralen können diese bekanntlich nur nach Zusatz von externen Weichmachern, beispielsweise von Phthalsäureestern von Alkoholen mit 6 bis 10 C-Atomen, Triethylenglykol-di-n-heptanoat, Tri-(2-ethylhexyl)-phosphat und Trikresylphosphat thermoplastisch verarbeitet werden. Da diese Weichmacher mit den Polyvinylbutyralen häufig nur begrenzt mischbar bzw. verträglich sind, können sie sich aus dem Polymerisat abscheiden, und selbst verträgliche Weichmacher können z.B. beim Kontakt mit Lösungsmitteln aus dem Gemisch extrahiert werden. In beiden Fällen ergeben sich erhebliche Eigenschaftsveränderungen des Produkts, die zu Nachteilen und Schäden bei seiner Anwendung fuhren können.

Es ist daher bereits versucht worden, Polyvinylacetale innerlich weichzumachen. Nach den US-PS-en 2356479 und 2459488 gelingt dies prinzipiell durch Acetalisierung mit Alkoxyacetaldehyden, dies allerdings erst bei sehr hohen Acetalisierungsgraden, bei denen der Restgehalt an freien Vinylalkoholeinheiten in dem Polyvinylacetal naturgemäß niedrig wird, wodurch die Haftung des Polyvinylacetals an bestimmten Substraten, z.B. an Metallen und Glas, deutlich abnimmt.

Eine weitere Möglichkeit, innerlich weichgestellte Polyvinylacetale herzustellen, ist aus der DE-OS 3835840 bekannt. Hiernach werden innerlich weichgestellte Polyvinylacetale durch Acetalisierung von Pfropfpolyvinylalkoholen auf einer Polyurethanpfropfgrundlage erhalten. Die resultierenden acetalisierten Pfropfpolymerisate sind bei niedrigen Temperaturen thermoplastisch verformbar und zeichnen sich durch gute Haftung auf diversen Materialien aus. Sie sind aber in Wasser weder löslich noch dispergierbar.

In der DE-Patentanmeldung P 3913572.1 werden schließlich Polyvinylacetale vorgeschlagen, die durch Acetalisierung von Polyvinylalkoholen mit terminal verätherten Oligoethylenoxidaldehyden erhältlich sind. Diese Verbindungen zeichnen sich durch gute thermoplastische Verarbeitbarkeit ohne externe Weichmacher sowie durch ihre Löslichkeit bzw. Dispergierbarkeit in Wasser aus. Nachteilig ist bei diesen Verbindungen ihre teilweise nur geringe und häufig unzureichende Haftung an verschiedenen Materialien, wie z.B. an Glas oder verschiedenen Metallen.

Der vorliegenden Erfindung lag somit die Aufgabe zugrunde, innerlich weichgemachte Pfropfpolyvinylacetale mit hohen Gehalten an freien Vinylalkoholeinheiten verfügbar zu machen, die ohne Zusatz externer Weichmacher thermoplastisch verarbeitbar sind. Außerdem war anzustreben, Pfropfpolyvinylacetale verfügbar zu machen, die bei guter thermoplastischer Verarbeitbarkeit ein breites Anwendungsgebiet abdecken können, indem sie z.B. in kaltem Wasser oder in organischen Lösungsmitteln löslich sind und außerdem große Haftungsaffinität auf Metallen und Glas entfalten können.

Dieses Ziel kann gemäß vorliegender Erfindung mit Pfropfpolyvinylacetalen erreicht werden, in denen sich mindestens ein Teil der Acetalgruppen von Aldehyden der Formel (I)

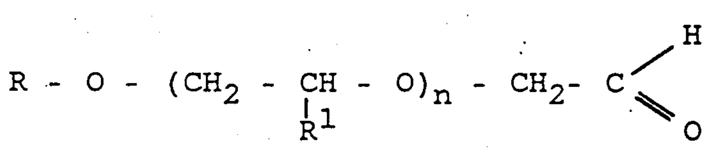

(I)

ableitet, in der n = eine ganze Zahl von 1 bis 50, vorzugsweise 1 bis 15, insbesondere 1 bis 3, besonders bevorzugt 2,

R = $(C_1\text{-}C_{20})$-Alkyl, $(C_6\text{-}C_{20})$-Cycloalkyl, -Aryl, -Aralkyl, -Alkaryl, vorzugsweise Benzyl, Phenyl, ein- bis dreifach durch $(C_1\text{-}C_{12})$-Alkyl substituiertes Phenyl, vorzugsweise $(C_1\text{-}C_{14})$-Alkyl, insbeson-

dere ($C_1$-$C_4$)-Alkyl, besonders bevorzugt Methyl,

$R^1$ = H, $-CH_3$, $-C_2H_5$, vorzugsweise H,

bedeutet.

Die Aldehyde der Formel (I) stellen terminal verätherte ω-Hydroxypolyalkoxyalkanale bzw. terminal verätherte ω-Hydroxyoligoalkoxyalkanale bzw. terminal verätherte ω-Hydroxyalkoxyalkanale dar. Die Verbindungen der Formel (I) werden in der Beschreibung sowie in den Patentansprüchen vereinfachend auch als ω-Hydroxy(poly)alkoxyalkanale bezeichnet. Besonders bevorzugt sind ω-Hydroxyoligoalkoxyalkanale mit n = 2 bis 15.

Aldehyde der Formel (I) sind aus Anlagerungsprodukten von Alkylenoxiden an Hydroxylverbindungen der Formel R-OH, worin R die Bedeutung wie in Formel (I) hat, und Umwandlung der endständigen OH-Gruppe in eine

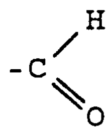

-Gruppe nach bekannten

Verfahren, z.B. durch katalytische Oxydehydrierung gemäß der DE-OS 3761304, zugänglich.

Die für die Acetalisierung erfindungsgemäß einsetzbaren Pfropfpolyvinylalkohole zur Herstellung von Pfropfpolyvinylacetalen auf Polyalkylenglykolbasis besitzen als Pfropfgrundlage insbesondere Polyalkylenglykole mit Molekulargewichten [M] von über 6000 g/mol, besonders bevorzugt sind solche mit Molekulargewichten von über 15000 g/mol. Das Molekulargewicht der Polyalkylenglykole ist im allgemeinen nicht kritisch und kann vorzugsweise im Bereich von 600 bis 200000 g/mol liegen. Bevorzugte Polyalkylenglykole sind z.B. Polyethylenoxide, Polypropylenoxide, Polybutylenoxide, Mischpolymere aus Ethylenoxid, Propylenoxid, Butylenoxid, vorzugsweise deren Blockcopolymere, besonders bevorzugt sind Polyethylenoxide.

Die für die Acetalisierung erfindungsgemäß einsetzbaren Pfropfpolyvinylalkohole zur Herstellung von Pfropfpolyvinylacetalen auf Polyurethanbasis besitzen als Pfropfgrundlage insbesondere Polyurethane mit mindestens 2 Urethangruppen pro Molekül, wobei die Anzahl der im Polyurethan enthaltenen Urethangruppen nach oben keiner besonderen Begrenzung unterliegt, bevorzugt sind allerdings Polyurethane mit 10 bis 100 Urethangruppen im Molekül.

Gegenstand der Erfindung sind daher polymere Acetale von auf eine Polyalkylenoxidpfropfgrundlage oder eine Polyurethanpfropfgrundlage aufgepfropften Polyvinylalkoholen, wobei die Polyurethanpfropfgrundlage mindestens 2 Urethangruppen im Molekül und Einheiten aus Diisocyanaten und gegebenenfalls geringen Mengen mononofunktionellen Isocyanaten sowie Einheiten aus Diolen, vorzugsweise aus Alkylenglykolen und/oder Polyalkylenglykolen vom Molekulargewicht 62 bis 10000 g/mol, und gegebenenfalls geringen Mengen Monohydroxyverbindungen enthält, und auf die Polyalkylenoxidpfropfgrundlage bzw. auf die Polyurethanpfropfgrundlage acetalisierte Vinylalkoholeinheiten enthaltende Polymerreste aufgepfropft, sind, dadurch gekennzeichnet, daß die polymeren Acetale, die durch Acetalisierung entsprechender Pfropfpolyvinylalkohole erhalten wurden, Acetalgruppen enthalten, die sich von verätherten ω-Hydroxy(poly)-alkoxyalkanalen der Formel I

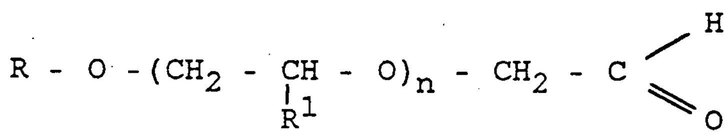 (I)

ableiten, in der n = eine ganze Zahl von 1 bis 50, vorzugsweise 1 bis 15, insbesondere 1 bis 3, besonders bevorzugt 2,

R = ($C_1$-$C_{20}$)-Alkyl, ($C_6$-$C_{20}$)-Cycloalkyl, -Aryl, -Aralkyl, -Alkaryl, vorzugsweise Benzyl, Phenyl, ein- bis dreifach durch ($C_1$-$C_{12}$)-Alkyl substituiertes Phenyl, vorzugsweise ($C_1$-$C_{14}$)-Alkyl, insbesondere ($C_1$-$C_4$)-Alkyl, besonders bevorzugt Methyl,

$R^1$ = H, $-CH_3$, $-C_2H_5$, vorzugsweise H,

bedeutet.

Die als Pfropfgrundlage einsetzbaren Polyurethane lassen sich nach üblichen Verfahren der Polyurethansynthese herstellen. Sie sind aus Diol- und Diisocyanatkomponenten aufgebaut und werden bevorzugt aus Diolen und Diisocyananten unter Verwendung von Katalysatoren, wie z.B. tertiären Aminen oder organischen Zinnverbindungen, bei Temperaturen zwischen 60 und 120°C, vorzugsweise zwischen 70 und 100°C, synthetisiert.

Prinzipiell sind alle bei der Polyurethansynthese verwendbaren Diolkomponenten einsetzbar. Bevorzugt sind cycloaliphatische Diole, wie z.B. Cyclohexandiole, sowie aliphatische Diole mit vorzugsweise 2 bis 12 C-Atomen. Bevorzugt sind ferner Polyalkylenglykole, wie z.B. Polypropylenoxide, Polybutylenoxide, Mischpolymere aus Ethylenoxid, Propylenoxid, Butylenoxid, vorzugsweise deren Blockcopolymere, besonders bevorzugt sind Polyethylenoxide. Vorzugsweise werden Polyethylenglykole mit Molekulargewichten zwischen 200 und 10000 g/mol verwendet, wobei Polyethylenglykole mit Molekulargewichten zwischen 400 und 1500 g/mol besonders bevorzugt sind. Die Polyalkylenglykole werden gegebenenfalls in Kombination mit Kettenverlängerern eingesetzt. Bevorzugte Kettenverlängerer sind z.B. niedermolekulare aliphatische Diole, vor allem solche mit 2 bis 10 C-Atomen, wie z.B. Butandiole, Propandiole, Ethylenglykol, Diethylenglykol und/oder Triethylenglykol. Weiterhin sind als Kettenverlängerer auch Diamine und/oder Aminoalkohole mit primären und/oder sekundären Aminogruppen einsetzbar, wobei diese Verbindungen vorzugsweise 2 bis 10 C-Atome enthalten. Auch Dithiole und Hydroxymerkaptane mit 2 bis 10 C-Atomen sind als Kettenverlängerer geeignet.

Werden bei der Polyurethansynthese Kettenverlängerer eingesetzt, so liegt das molare Verhältnis der Polyalkylenglykole zu den Kettenverlängerern bevorzugt zwischen 1:0,099 und 1:0,71.

Als Isocyanatkomponenten eignen sich alle aromatischen, aliphatischen und cycloaliphatischen Diisocyanate und Polyisocyanate, wie sie üblicherweise für die Synthese von Polyurethanen eingesetzt werden. Besonders bevorzugt sind Diisocyanate, wie z.B. 1,5-Naphthylendiisocyanat, 4,4'-Diphenylmethandiisocyanat, 4,4'-Dibenzyldiisocyanat, 1,3-Phenylendiisocyanat, 1,4-Phenylendiisocyanat, Toluylendiisocyanat, m- und p-Diisocyanatoxylol, und, andere.

Bevorzugt ist ferner der Einsatz von aliphatischen und cycloaliphatischen Diisocyanaten mit 2 bis 12 C-Atomen im aliphatischen Rest, wie z.B. Ethylendiisocyanat, Propylendiisocyanat, Butylendiisocyanat, 2,2,4-Trimethylhexamethylendiisocyanat, 1,4-Diisocyanatocyclohexan, 4,4'-Methylen-bis(cyclohexyldiisocyanat), 1-Methyl-2,4-cyclohexyldiisocyanat, 1-Methyl-2,6-cyclohexyldiisocyanat, 1,3-Bis(isocyanatomethyl)-cyclohexan, 1,6-Hexamethylendiisocyanat und andere. Besonders bevorzugt ist die Verwendung von Isophorondiisocyanat.

Die aufgeführten Isocyanate können einzeln oder in Kombination eingesetzt werden.

Die Molverhältnisse von Diol- zu Diisocyanatkomponenten liegen vorzugsweise zwischen 1:0,99 und 1:0,5, insbesondere zwischen 1:0,98 und 1:0,7. Die mittleren Molekulargewichte der Polyurethane liegen vorzugsweise zwischen 200 und 100000 g/mol, insbesondere zwischen 1000 und 60000 g/mol, besonders bevorzugt zwischen 3000 und 40000 g/mol.

Besonders bevorzugt sind Polyetherurethanpfropfgrundlagen.

Zum Pfropfen auf die Polyalkylenglykolpfropfgrundlagen bzw. in analoger Weise auf die Polyurethanpfropfgrundlagen werden bevorzugt Carbonsäurevinylester mit 3 bis 20 C-Atomen, vorzugsweise 4 bis 14 C-Atomen, eingesetzt. Besonders bevorzugt sind Vinylacetat und/oder Vinylpropionat, insbesondere Vinylacetat. Bevorzugt sind ferner Gemische aus Vinylacetat und/oder Vinylpropionat und/oder Vinylpropionat in Kombination mit Vinylversatat.

Auch die Pfropfung mit verschiedenen Carbonsäurevinylestern, vorzugsweise unter Bildung von Blockcopolymeren, gegebenenfalls in Kombination mit weiteren, von den Carbonsäurevinylestern verschiedenen ethylenisch ungesättigten Monomeren, kann vorteilhaft sein. Als weitere ethylenisch ungesättigte Monomere sind hierbei alle radikalisch polymerisierbaren und copolymerisierbaren ethylenisch ungesättigten Monomeren geeignet, vorzugsweise Acryl- und Methacrylsäurederivate, wie z.B. Acryl- und Methacrylsäureester, Acryl- und Methacrylamide, $\alpha$-Olefine mit 2 bis 20 C-Atomen, Styrol und Styrolderivate, Acrylnitril und Acrylnitrilderivate, Vinylpyrrolidon und Vinylpyrrolidonderivate sowie Vinylchlorid. Weiterhin können auch ethylenisch ungesättigte Säuren, vorzugsweise Carbonsäuren, und deren Derivate, wie z.B. Maleinsäure, Crotonsäure, Itaconsäure, Acrylsäure, Methacrylsäure, gepfropft werden. Besonders bevorzugt sind Vinylacetat und/oder Vinylpropionat.

Die Pfropfung der Monomeren auf die Pfropfgrundlagen wird unter Verwendung von Radikalketten startenden Initiatoren durchgeführt, wobei hierfür vorzugsweise alle in den Monomeren, der Monomerenmischung bzw. der Monomerenlösung löslichen Radikalbildner in Betracht kommen können. Insbesondere organische Perverbindungen, wie z.B. Peroxide und Percarbonate, sowie organische Azoverbindungen haben sich für die Pfropfung bewährt. Grundsätzlich ist die Pfropfungsreaktion in Gegenwart geringer

Mengen Lösungsmittel, wie z.B. Methanol oder Ethanol, durchführbar. Bevorzugt wird jedoch ohne Lösungsmittel in Substanz gepfropft. Auch Gemische aus Polyalkylenglykolpfropfgrundlagen und Polyurethanpfropfgrundlagen können zur Pfropfung eingesetzt werden.

Die erhaltenen Pfropfpolymerisate lassen sich durch Hydrolyse oder Umesterung in teil- oder vollverseifte Produkte, die nachfolgend auch Pfropfpolyvinylalkohole (Pfropf-PVAL) genannt werden und als Ausgangspfropfpolyvinylalkohole für die Acetalisierungsreaktionen dienen, überführen, wobei der Hydrolysegrad vorzugsweise mindestens 10 Mol-%, insbesondere 30 bis 100 Mol-%, besonders bevorzugt 45 bis 99 Mol-%, bezogen auf die Molzahl verseifbarer Monomereinheiten im Pfropfpolymerisat, beträgt.

Der Anteil der aufgepfropften Komponenten auf die jeweilige Pfropfgrundlage beträgt bei den Pfropfpolymerisaten bzw. deren Verseifungsprodukten vorzugsweise 10 bis 95 Gew.-%, insbesondere 20 bis 90 Gew.-%, besonders bevorzugt 25 bis 80 Gew.-%, bezogen auf das Pfropfpolymerisat bzw. dessen Verseifungsprodukt.

Die Herstellung von Pfropfpolymerisaten mit Polyurethanpfropfgrundlagen ist aus der DE-OS 3732089 bekannt.

Die erfindungsgemäß aus den Ausgangspfropfpolyvinylalkoholen erhältlichen Pfropfpolyvinylacetale können neben Acetalgruppen, die sich von Aldehyden der Formel (I) ableiten, noch andere Acetalgruppen enthalten, die sich von aliphatischen, cycloaliphatischen, araliphatischen oder aromatischen Aldehyden, bevorzugt solchen mit 1 bis 20 C-Atomen, die gegebenenfalls durch OH-Gruppen oder Halogenatome, vorzugsweise F- oder Cl-Atome, substituiert sind, ableiten. Eingesetzt werden z.B. vorzugsweise Formaldehyd, Acetaldehyd, Propionaldehyd, Butyraldehyd, Isononanaldehyd und Benzaldehyd, insbesondere Butyraldehyd. Gegebenenfalls werden zur Acetalisierung auch Derivate dieser Aldehyde, wie z.B. durch OH-Gruppen oder Halogenatome substituierte Aldehyde verwendet. Es lassen sich durch die Mitverwendung solcher von den Formel(I)-Aldehyden verschiedenen Aldehyde oder Aldehydgemische beispielsweise die Löslichkeitseigenschaften der erfindungsgemäßen Acetale wesentlich beeinflussen.

Insgesamt sollte die Acetalisierung des Pfropfpolyvinylalkohols vorzugsweise 1 bis 85 Mol-%, insbesondere 30 bis 80 Mol-%, besonders bevorzugt 45 bis 75 Mol-%, der ursprünglich in dem Ausgangs-Pfropf-PVAL vorhandenen Vinylalkoholeinheiten (= 100 Mol-%) erfassen. Die Acetalisierung mit Formel (I)-Aldehyden sollte dabei vorzugsweise mindestens 1 Mol-%, besonders bevorzugt bis zu 10 Mol-%, insbesondere bis zu 20 Mol-% der ursprünglich vorhandenen Vinylalkoholeinheiten erfassen.

Die Eigenschaften der Pfropfpolyvinylacetale, insbesondere die Löslichkeiten und die Glastemperatur, werden durch den verwendeten Aldehyd bzw. das verwendete Aldehydgemisch und den Acetalisierungsgrad wesentlich beeinflußt. So führt z.B. die Einführung einer weiteren Ethylenoxidgruppe in terminal vergleichbar verätherte $\omega$-Hydroxyethoxyalkanale oder $\omega$-Hydroxyoligoethoxyalkanale der Formel (I) bei gleichem Acetalisierungsgrad zu einer deutlich höheren inneren Weichmachung des polymeren Acetals. Dies äußert sich messbar in einem Absinken der Glastemperatur des Pfropfpolyvinylacetals. Ebenfalls eine höhere innere Weichmachung, bei gleichem Aldehyd der Formel (I), kann z.B. durch einen höheren Acetalisierungsgrad erzielt werden. Die Löslichkeit der Pfropfpolyvinylacetale ist u.a. auch durch die Art und Länge des Restes R in Formel (I) des für die Acetalisierung eingesetzten Aldehyds sowie durch den Acetalisierungsgrad beeinflußbar. Die Wasserlöslichkeit erfindungsgemäßer Pfropfpolyvinylacetale läßt sich ferner durch Mischacetalisierung mit anderen aliphatischen bzw. aromatischen Aldehyden, insbesondere mit Butyraldehyd, beeinflussen. Acetalisierungen mit Aldehyden der Formel (I) mit R = Methyl ohne die zusätzliche Mitverwendung weiterer Aldehyde führen zu wasserlöslichen Pfropfpolyvinylacetalen. Mischacetalisierungen mit Aldehyden der Formel (I) in Kombination mit anderen aliphatischen Aldehyden, wie z.B. Butyraldehyd, können je nach dem Verhältnis der eingesetzten Aldehyde zueinander und in Abhängigkeit vom Acetalisierungsgrad zu wasserlöslichen oder wasserdispergierbaren oder zu wasserunlöslichen Pfropfpolyvinylacetalen führen.

Die Herstellung der erfindungsgemäßen Pfropfpolyvinylacetale aus Pfropfpolyvinylalkoholen und Aldehyden nach Maßgabe der gewünschten Stöchiometrie kann nach bekannten Methoden in wäßrigem, in wäßrig/organischem oder in organischem Medium, vorzugsweise in wäßrigem Medium, in Gegenwart saurer Katalysatoren, wie z.B. Salzsäure, Schwefelsäure, Phosphorsäure oder p-Toluolsulfonsäure, erfolgen. Man kann dabei den Katalysator allmählich zu einer den Aldehyd enthaltenden wäßrigen Lösung von Pfropfpolyvinylalkohol, oder den Aldehyd zu einer den Katalysator enthaltenden wäßrigen Lösung von Pfropfpolyvinylalkohol geben, oder die Umsetzung in einem Eintopfverfahren durchführen.

Vorteilhaft kann sich bei der Acetalisierung in wäßrigen Medien die Mitverwendung von Emulgatoren auf den Acetalisierungsverlauf auswirken. Als Emulgatoren kommen hierbei vorzugsweise anionische Emulgatoren, insbesondere aus der Gruppe ($C_8$-$C_{20}$)-Alkansulfonsäuren, fluorierte Fettsäuren bzw. fluorierte langkettige Sulfonsäuren, langkettige Alkylsulfosuccinatester oder Gemische aus diesen Emulgatoren, in Frage.

Für die Acetalisierung sind grundsätzlich alle bekannten Pfropfpolyvinylalkohole mit einer Polyalkylenpfropfgrundlage oder einer Polyurethanpfropfgrundlage einsetzbar (vgl. DE-OS 3732089). Auch Mischungen dieser Pfropfpolyvinylalkohole können eingesetzt werden. Gegebenenfalls können in manchen Fällen auch Zusätze von nicht gepfropften Polyvinylalkoholen vorteilhaft sein.

Zur Herstellung erfindungsgemäßer wasserunlöslicher Pfropfpolyvinylacetale in wäßrigem Medium werden zunächst vorzugsweise 1 bis 50 gew.-%ige, insbesondere 5 bis 20 gew.-%ige, wäßrige Lösungen von Pfropfpolyvinylalkohol, vorzugsweise in der Wärme, hergestellt, der Säurekatalysator zugesetzt, die Lösungen anschließend auf Temperaturen < 15 ° C abgekühlt und die Acetalisierungsreaktion durch Zudosieren des Aldehyds nach Maßgabe der gewünschten Stöchiometrie, vorzugsweise innerhalb von 5 bis 300 Minuten, unter starkem Rühren und gegebenenfalls unter Schutzgasatmosphäre durchgeführt. Nach Beendigung der Zudosierung wird das Reaktionsgemisch unter Acetalisierungsbedingungen noch 1 bis 3 Stunden gerührt, gegebenenfalls anschließend neutralisiert, und das Pfropfpolyvinylacetal isoliert, gewaschen und getrocknet. Die Acetalisierungsreaktion ist gegebenenfalls auch durch gleichzeitiges Zudosieren der gegebenenfalls auf < 15 ° C gekühlten Reaktanten, Reaktantenlösungen und Katalysatoren in einen Rührreaktor, gegebenenfalls unter Inertgasatmosphäre, als Eintopfverfahren durchführbar.

Die Menge des zuzusetzenden Aldehyds richtet sich nach dem angestrebten Acetalisierungsgrad und dem daraus errechenbaren stöchiometrischen Bedarf sowie dem erzielbaren Umsatz.

In einer besonders bevorzugten Verfahrensvariante zur Herstellung wasserunlöslicher polymerer Acetale wird die Acetalisierung in der wäßrigen Ausgangspfropfpolyvinylalkohol-Säurekatalysator-Lösung bei Temperaturen von 5 bis 10 ° C in Gang gesetzt, wonach sich das gebildete wasserunlösliche Pfropfpolyvinylacetal meist alsbald pulverförmig abzuscheiden beginnt. Zur Vervollständigung der Reaktion wird das Reaktionsgemisch bis zur Beendigung der Zudosierung langsam auf Raumtemperatur erwärmt und nach Beendigung der Zudosierung vorzugsweise eine ca. 1 bis 3 Stunden dauernde Nachreaktion bei einer höheren Temperatur, z.B. bei 25 bis 70 ° C, unter Rühren, angeschlossen.

Gegebenenfalls wird die Umsetzung vorteilhaft unter Emulgatorzusatz durchgeführt, wobei der Emulgator, vorzugsweise eine tensioaktive Sulfonsäure, die gleichzeitig als Emulgator und als Säurekatalysator wirken kann, was insbesondere bei den wasserunlöslichen Pfropfpolyvinylacetalen zu einer Erhöhung ihrer Reaktivität bei der Acetalisierung u.a. infolge einer Verbesserung ihrer Benetzbarkeit führen und daher besonders vorteilhaft sein kann. Der Emulgator kann entweder der Ausgangslösung oder dem Reaktionsgemisch während des Reaktionsverlaufs und/oder bei der Nachreaktion zugesetzt werden. Die zu verwendende Menge Säurekatalysator richtet sich u.a. nach dem angestrebten Acetalisierungsgrad und kann vorzugsweise bis zu 1,1 val, bezogen auf den molaren Vinylalkoholeinheitengehalt, betragen.

Das resultierende wasserunslösliche Pfropfpolyvinylacetal, das sich vorzugsweise in Pulverform aus der wäßrigen Reaktionslösung abscheidet, wird von der flüssigen Phase abgetrennt, mit schwach alkalisch eingestelltem Wasser (pH 9-12) gewaschen und getrocknet.

Die erfindungsgemäßen wasserlöslichen Pfropfpolyvinylacetale können ebenfalls nach dem vorstehend beschriebenen bevorzugten Verfahren in wäßrigem Medium hergestellt werden. Die resultierenden wäßrigen Pfropfpolyvinylacetallösungen zeigen jedoch im allgemeinen eine temperaturabhängige Phasenentmischung. Die Phasenübergangstemperatur (Trübungstemperatur bzw. Trübungspunkt in ° C) wird dabei durch den Acetalisierungsgrad und die Zusammensetzung der wäßrigen Phase beeinflußt. Durch diese Phasenentmischungstemperatur wird auch die maximale Acetalisierungstemperatur festgelegt, die vorzugsweise nicht überschritten werden soll. Die Isolierung des polymeren Acetals aus der wäßrigen Lösung kann, nach vorausgegangener Neutralisation der Lösung, durch den Zusatz geeigneter Fällungsmittel erfolgen. Geeignete Fällungsmittel sind vorzugsweise z.B. verschiedene wasserlösliche anorganische Salze, wie z.B. Natriumchlorid, Kaliumchlorid, Natriumsulfat, Magnesiumchlorid, Calziumchlorid. Weiterhin können zur Fällung wassermischbare Lösungsmittel, z.B. wasserlösliche Alkohole, vorzugsweise Ethanol und/oder Methanol, und andere wassermischbare organische Lösungsmittel, vorzugsweise z.B. Tetrahydrofuran und/oder Dioxan, verwendet werden. Alternativ kann das polymere Acetal nach vorausgegangener Dialyse seiner wäßrigen Lösung durch Gefriertrocknung isoliert werden. Besonders bevorzugt erfolgt die Isolierung erfindungsgemäßer wasserlöslicher Pfropfpolyvinylacetale, nach vorausgegangener Neutralisation der wäßrigen Lösung, durch einfaches Erhitzen der Lösung auf eine Temperatur oberhalb der Phasenentmischungstemperatur. Es kommt dabei zu einer vollständigen Phasenentmischung. Das resultierende Pfropfpolyvinylacetal wird heiß abfiltriert, mit heißem Wasser gewaschen und anschließend getrocknet.

Grundsätzlich ist die Herstellung aller erfindungsgemäßen Pfropfpolyvinylacetale auch in organischen Lösungsmitteln durchführbar. Mit den in organischen Lösungsmitteln nicht löslichen Ausgangspfropfpolyvinylalkoholen kann sie als Zwei- bzw. Mehrphasenreaktion durchgeführt werden. Durch Zusatz von Wasser zu wasserlöslichen bzw. wasserverdünnbaren Lösungsmitteln kann häufig auch eine Einphasenreaktion erreicht werden.

Als Lösungsmittel eignen sich hierbei z.B. Xylole, Toluol, Chloroform, Methylenchlorid, besonders geeignet sind wassermischbare Lösungsmittel, vorzugsweise wasserlösliche Alkohole, insbesondere Ethanol und/oder Methanol, Tetrahydrofuran, Dioxan, Aceton und andere.

Zur Herstellung erfindungsgemäßer Pfropfpolyvinylacetale in organischen Lösungsmitteln werden der Säurekatalysator, der Aldehyd und der Pfropf-PVAL in dem organischen Lösungsmittel aufgeschlämmt bzw. suspendiert bzw. dispergiert oder gegebenenfalls gelöst und das Gemisch unter Rückfluß erhitzt. Gegebenenfalls kann der Aldehyd auch während des-Reaktionsverlaufs zudosiert werden. Die in dem organischen Lösungsmittel unlöslichen Ausgangspfropfpolyvinylalkohole gehen dabei mit fortschreitender Acetalisierung in Lösung. Nach Beendigung der Acetalisierungsreaktion kann das Reaktionsprodukt durch Zusatz von unpolaren Lösungsmitteln, wie z.B. Pentan, Hexan, Heptan u.a., zu der Reaktionslösung oder durch Eingießen der Reaktionslösung in eiskaltes Wasser bzw. in ein eiskaltes Wasser-Ethanol- oder Wasser-Methanol-Gemisch ausgefällt, von der flüssigen Phase abgesaugt, mit schwach alkalisch eingestelltem Wasser (pH 9-12) gewaschen und getrocknet werden. Alternativ kann das Produkt auch durch Abdestillieren des Lösungsmittels nach erfolgter Neutralisation und gegebenenfalls Eliminierung des Säurekatalysators isoliert werden.

Die erfindungsgemäßen Pfropfpolyvinylacetale lassen sich gegebenenfalls nach unterschiedlichen Methoden vernetzen. So können Vernetzungen z.B. durch Anwendung von reaktiven mehrfachfunktionellen Verbindungen, wie z.B. Isocyanaten oder Säurechloriden, erzielt werden, oder auch durch radikalisch initiierte Vernetzungen, wie z.B. durch photochemische oder thermische Initiierung in Gegenwart von Radikalbildnern und radikalisch polymerisierbaren Monomeren.

Aufgrund dieser zu Vernetzungen führenden Eigenschaften eignen sich die erfindungsgemäßen Pfropfpolyvinylacetale auch zur Verwendung als Bindemittel z.B. in Lackzubereitungen auf Lösungsmittelbasis im Falle der wasserunlöslichen Pfropfpolyvinylacetale, bzw. in Lackzubereitungen auf wäßriger Basis im Falle der wasserlöslichen oder wasserdispergierbaren Pfropfpolyvinylacetale.

Mit wasserdispergierbaren Pfropfpolyvinylacetalen auf einer Polyurethanpfropfgrundlage lassen sich z.B. Dispersionen mit einem Feststoffgehalt von $< 40$ Gew.-% herstellen. Diese Dispersionen sind insbesondere in wäßrigen Lackzubereitungen vorteilhaft einsetzbar.

Aufgrund guter Adhesiv- und Haftungseigenschaften erfindungsgemäßer Pfropfpolyvinylacetale gegenüber diversen Materialien, vorzugsweise gegenüber Metallen und Glas, lassen sich die Polymerisate vorteilhaft als Beschichtungsmassen verwenden, wobei solche Beschichtungen aus Pfropfpolymerisat-Lösungen, aus Dispersionen oder als Pfropfpolymerisatschmelzen aufgebracht werden können.

Demgegenüber lassen sich z.B. handelsübliche Polyvinylbutyrale im allgemeinen nicht ohne den Zusatz von organischen Weichmachern aus der Schmelze anwenden.

Wegen ihrer überraschend guten Haftungseigenschaften und ihres vorteilhaften nichtkorrosiven Verhaltens stellen die erfindungsgemäßen Pfropfpolyvinylacetale insbesondere interessante Beschichtungsmassen für Metalle, vorzugsweise für Eisen und Stahl, dar. Bevorzugt sind hierbei Pfropfpolyvinylacetale mit Polyurethanpfropfgrundlagen wegen ihres besonders vorteilhaften nichtkorrosiven Verhaltens auf Metallen.

Gegenstand der Erfindung ist daher ferner die Verwendung der erfindungsgemäßen Pfropfpolyvinylacetale, u.a. auf allen in der vorliegenden Beschreibung genannten Anwendungsgebieten, insbesondere als Bindemittel zur Herstellung von Lacken und Beschichtungsmassen, als transparente Zwischenlagenfolien bei der Herstellung von Verbundglas, als Dispergiermittel und Schutzkolloid, als Schlichtemittel und als Schmälzmittel in der Textilverarbeitung.

Die erfindungsgemäßen Pfropfpolyvinylacetale können vorteilhaft auch auf zahlreichen Anwendungsgebieten eingesetzt werden, auf denen üblicherweise bekannte Polyvinylacetale, die im allgemeinen nur in organischen Lösungsmitteln löslich sind, Verwendung finden, vorzugsweise z.B. als Bindemittel für Pigmente, zur Herstellung von Druckfarben, von Schmelzklebern, von lösungsmittelhaltigen bzw. lösungsmittelfreien Klebstoffen sowie als Bindemittel für Keramikpulver, z.B. für Keramikgrünfolien bei der Herstellung von hochwertigen keramischen Elektronikbauteilen. Sie eignen sich auch als Bindemittel und/oder Beschichtungsbestandteil für anorganische und/oder organische Fasern, Fäden, Faservliese, textile Gebilde, Zellulosematerialien und Papier. Darüber hinaus sind sie als Bindemittel für Photodruckplatten und Photoresistmaterial geeignet.

Je nach Anwendung können die erfindungsgemäßen Pfropfpolyvinylacetale mit üblichen Zusatzstoffen vermischt werden, wie z.B. Pigmenten, Farbstoffen, Weichmachern, Lösungsmitteln, Haftungsregulatoren und Stabilisatoren. Wie bereits vorstehend erwähnt, ist eine Mitverwendung von Weichmachern bei der thermoplastischen Verformung erfindungsgemäßer Pfropfpolyvinylacetale prinzipiell nicht erforderlich, obgleich sie in manchen Fällen vorteilhaft sein kann. Im letzteren Fall liegen jedoch bei den erfindungsgemäßen Pfropfpolyvinylacetalen die Aufwandmengen an Weichmachern deutlich niedriger als bei vergleichbaren bekannten nicht gepfropften Polyvinylacetalen, insbesondere Polyvinylbutyralen. Auch Mischungen bzw.

Verschnitte aus erfindungsgemäßen Pfropfpolyvinylacetalen mit üblichen Polyvinylacetalen auf Basis von nicht gepfropften Polyvinylalkoholen, vorzugsweise mit üblichen Polyvinylbutyralen, sind möglich und können in manchen Fällen vorteilhaft sein.

Als Stabilisatoren können die bei den bekannten Polyvinylbutyralen verwendeten phenolischen Verbindungen Verwendung finden, wie 2,6-Di-tert.-butyl-4-methylphenol, z.B. Jonol (Hersteller: Fa. Shell), Phosphite wie Tris-nonylphenylphosphit.

Die Zugabe der genannten Zusatzstoffe und gegebenenfalls weiterer Zusatzstoffe kann in vielen Fällen sowohl vor als auch während oder nach der Herstellung der erfindungsgemäßen Pfropfpolyvinylacetale erfolgen.

Die Erfindung wird durch die nachstehenden Beispiele näher erläutert.

Die Grenzviskositätszahl [$\eta$] ("eta" = Intrinsic-Viskosität) wird in allen Beispielen vorzugsweise im Ostwald-Viskosimeter bestimmt. Die Konzentrationen der gemessenen Lösungen werden dabei so niedrig gewählt, daß keine "Hagenbachkorrektur" durchgeführt werden muß.

Die Molekulargewichte [M] sind aus der Stöchiometrie der Komponenten errechnete gewichtsmittlere Molekulargewichte.

Die Bestimmung der Hydrolysegrade wird nach literaturbekannten Methoden durchgeführt, wobei die Polymeren mit Alkalilauge vollständig verseift werden.

Beispiel 1

Herstellung einer Polyurethanpfropfgrundlage

In einem Reaktionsgefäß mit Rührwerk werden unter Stickstoffatmosphäre 3000 g Polyethylenglykol (M = 600), 193,1 g 1,4-Butandiol und 1,5 ml N,N-Dimethylpiperazin vorgelegt und auf eine Temperatur von 73 °C erwärmt. Anschließend werden innerhalb von 2,5 Stunden 1428,2 g Isophorondiisocyanat solchermaßen zugetropft, daß die Temperatur der Reaktionsmischung 100 °C nicht überschreitet. Zur Vervollständigung der Reaktion wird das Reaktionsgemisch 2 weitere Stunden bei 80 °C gerührt.

Die Vollständigkeit des Umsatzes und damit das Ende der Reaktion wird durch Analyse des Diisocyanatverbrauchs nach üblichen Methoden (IR-Spektroskopie, Titration) ermittelt.

Das erhaltene Polymere besitzt ein errechnetes Molekulargewicht M von 26550 g/mol und liegt bei 20 °C als hochviskose Flüssigkeit vor.

Die Grenzviskositätszahl [$\eta$] des Polymeren in methanolischer Lösung beträgt 16,5 ml/g, ermittelt im Ostwald-Viskosimeter bei 25 °C.

Beispiel 2

Herstellung eines Pfropfpolyvinylacetats (Pfropf-PVAc) auf einer Polyurethanpfropfgrundlage

1500 g der Polyurethanpfropfgrundlage aus Beispiel 1 werden in einem Rührgefäß vorgelegt und unter Stickstoffatmosphäre auf eine Temperatur von 75 °C erwärmt. Anschließend wird eine Lösung von 26,1 g 75 gew.-%igem Dibenzoylperoxid in 3480 g Vinylacetat innerhalb von 5 Stunden so zudosiert, daß die Temperatur des Reaktionsgemisches 90 °C nicht überschreitet. Dabei ist ferner darauf zu achten, daß das zu pfropfende monomere Vinylacetat einschließlich des darin gelösten Katalysators so langsam der Polyurethanpfropfgrundlage zudosiert wird, daß die Bildung von nicht-aufgepfropftem Homopolymerisat praktisch vollständig unterbleibt. Nach Beendigung des Zusatzes der genannten Monomer-Initiator-Mischung schließt man eine Nachreaktionsphase von 45 Minuten bei 80 °C unter Rühren an. Nach Beendigung der Nachreaktion wird gegebenenfalls noch vorhandenes überschüssiges Restmonomeres durch azeotrope Destillation mit Methanol entfernt und das resultierende Pfropfpolyvinylacetat erhalten.

Ausbeute: 4886 g Polymerisat (= 97,3 % der Theorie, bezogen auf eingesetztes Vinylacetat)
M (berechnet): 86485 g/mol

Das Pfropfpolymerisat liegt bei 20 °C in fester, harzartiger Form vor.

Zusammensetzung es erhaltenen Pfropfpolyvinylacetats (errechnet):
2,257 g Vinylacetateinheiten pro g Polyurethanpfropfgrundlage

Die Grenzviskositätszahl [$\eta$] des Polymeren in Tetrahydrofuran (THF) beträgt 25,9 ml/g, gemessen im Ostwaldviskosimeter bei 25 °C.

Beispiel 3

Herstellung eines Pfropfpolyvinylalkohols (Pfropf-PVAL) auf einer Polyurethanpfropfgrundlage

In einem Rührgefäß werden 8598 g einer 50 gew.-%igen methanolischen Lösung des Pfropf-PVAc-s aus Beispiel 2 bei Raumtemperatur mit 266,2 g 10 gew.-%iger methanolischer Natronlauge unter Rühren vermischt. Nach ca. 16 Minuten erstarrt die Reaktionsmischung zu einem Gel. Nach 2 Stunden wird dieses Gel in einer Mühle unter mechanischer Zerteilung granuliert, das resultierende Gelgranulat in Methanol aufgeschlämmt, mit Essigsäure neutralisiert, abgesaugt, mehrmals mit Methanol gewaschen und unter Vakuum bei Temperaturen von 40 bis 50 ° C getrocknet. Der resultierende Pfropf-PVAL wird in Granulatform erhalten und besitzt folgende Eigenschaftsmerkmale:

| | |
|---|---|
| Hydrolysegrad: | 98,5 Mol.-% |
| M (berechnet): | 57660 g/mol |

Die Grenzviskositätszahl [$\eta$] des Polymeren in Wasser beträgt 17,3 ml/g, gemessen im Ostwaldviskosimeter bei 25 ° C.

Die Höppler-Viskosität der 4 gew.-%igen wäßrigen Polymerisatlösung bei 20 ° C beträgt 2,64 mPa.s.

Beispiel 4

Herstellung eines Pfropfpolyvinylacetals aus einem Pfropfpolyvinylalkohol

In einem Reaktionsgefäß mit Rührwerk wird unter Stickstoffatmosphäre und Erwärmung eine 20 gew.-%ige wäßrige Lösung des Pfropf-PVAL-s aus Beispiel 3 mit 140 g Polymerisatgehalt hergestellt. Diese Lösung wird unter Rühren mit 110 ml 20 gew.-%iger wäßriger Salzsäure und 0,14 g Ionol (= handelsüblicher phenolischer Oxydationsstabilisator der Firma Shell) vermischt, anschließend werden ihr innerhalb von 30 Minuten bei 50 ° C 83,7 g 3,6-Dioxaheptanal zugetropft und die Reaktionsmischung wird danach während 5 Stunden bei 48 ° C gerührt. Es entsteht eine hochviskose Lösung. Diese wird durch Zusatz von wäßriger KOH-Lösung bei Raumtemperatur neutralisiert und auf pH 7,5 eingestellt, das entstandene KCl durch Dialyse gegen entsalztes Wasser entfernt und das resultierende Pfropfpolyvinylacetal durch Gefriertrocknung pulverförmig bis granulatförmig erhalten. Der Gehalt an Vinylalkoholeinheiten in dem Pfropfpolyvinylacetal beträgt 10,6 Gew.-%, bezogen auf das Pfropfpolyvinylacetal, und der Alkalititer des Produktes beträgt 28 ml n/100 HCl pro 100 g Polymerisat.

Das resultierende Pfropfpolyvinyl-3,6-dioxaheptyral ist löslich sowohl in Wasser als auch z.B. in wäßrigen 1:1-Mischungen mit wasserlöslichen organischen Lösungsmitteln, vorzugsweise Alkoholen, wie z.B. Methanol, Ethanol, Isopropanol, oder Ketonen, wie z.B. Aceton.

Die Glastemperatur $T_G$ des erhaltenen Pfropfpolyvinylacetals liegt bei 15 ° C. Demgegenüber liegt die $T_G$ eines üblichen Polyvinylbutyrals aus nicht gepfropftem Polyvinylalkohol von vergleichbarem Molekulargewicht und vergleichbarem Acetalisierungsgrad bei 75 ° C.

Das erhaltene Pfropfpolyvinyl-3,6-dioxaheptyral läßt sich bei 165 ° C und einem Druck von 80 bar ohne Zusatz von Weichmachern thermoplastisch zu wasserlöslichen Pressfolien verarbeiten, die sehr gute Haftungseigenschaften z.B. auf Glas und auf Metallen aufweisen.

Beispiel 5

Das Beispiel 4 wird wiederholt mit der Abänderung, daß die Isolierung des Endproduktes nicht durch Gefriertrocknung der dialysierten Lösung, sondern durch Eintropfen der ausreagierten und neutralisierten Reaktionslösung in eiskaltes Tetrahydrofuran (THF) von 0 ° C erfolgt, wobei das Pfropfpolyvinyl-3,6-dioxaheptyral pulverförmig ausfällt und abgesaugt, mit kaltem THF gewaschen und unter Vakuum getrocknet wird.

Die Eigenschaften des resultierenden Polymerisats sind weitgehend identisch mit denen des aus Beispiel 4 erhaltenen Polymerisats.

Beispiel 6

Das Beispiel 5 wird wiederholt mit der Abänderung, daß anstelle von 83,7 g 3,6-Dioxaheptanal nur 22,5 g 3,6-Dioxaheptanal zugetropft werden und die Mischung danach während 3 Stunden bei 48 °C gerührt wird. Nach Abkühlung der Reaktionsmischung auf 7 °C werden ihr 31,5 g Butyraldehyd innerhalb von 30 Minuten zugetropft, wobei das Acetal als weißer Niederschlag ausfällt, der abgesaugt, neutralgewaschen und unter Vakuum getrocknet wird.

Das erhaltene Pfropfpolyvinylmischacetal enthält 15,7 Gew.-% Vinylalkoholeinheiten, bezogen auf das Pfropfpolyvinylmischacetal, und besitzt eine $T_G$ von 39 °C. Es ist gut löslich in Ethanol und läßt sich beispielsweise vorteilhaft als nicht korrosive Beschichtungsmasse für Metalle verwenden. Es ist ferner ohne den Zusatz von organischen Weichmachern thermoplastisch verformbar.

Beispiel 7

Das Beispiel 6 wird wiederholt mit der Abänderung, daß 60 g 3,6-Dioxaheptanal und 9 g Butyraldehyd, anstelle der in Beispiel 6 angegebenen Substanzmengen, eingesetzt werden. Der Unterschied des resultierenden Mischacetals, vergleichsweise zu dem Mischacetal aus Beispiel 6, besteht darin, daß das nach Beispiel 7 erhaltene Polymerisat während seiner Herstellung im wesentlichen in der wäßrigen Lösung gelöst bleibt und schließlich in Form einer feinteiligen wäßrigen Dispersion mit einem durchschnittlichen Partikeldurchmesser von 20 nm erhalten wird. Die $T_G$ des resultierenden polymeren Mischacetals beträgt 22 °C und sein Gehalt an Vinylalkoholeinheiten beträgt 15,7 Gew.-%, bezogen auf das Pfropfpolyvinylmischacetal. Die Dispersion eignet sich sehr gut zur Herstellung von Folien sowie zum Beschichten diverser Materialien, insbesondere für nicht korrosive Metallbeschichtungen. Diese sind durch die Mitverwendung von Fremdvernetzungsmitteln gegebenenfalls vernetzbar. Die resultierenden Mischacetalbeschichtungen bzw. -filme sind in Wasser redispergierbar. Sie sind auch löslich z.B. in niederen ($C_1$-$C_4$)-Alkoholen und in Aceton. In wasserfreiem Zustand ist das Mischacetal ohne den Zusatz von organischen Weichmachern thermoplastisch verformbar.

**Patentansprüche**

1. Polymere Acetale von auf eine Polyalkylenoxidpfropfgrundlage oder eine Polyurethanpfropfgrundlage aufgepfropften Polyvinylalkoholen, wobei die Polyurethanpfropfgrundlage mindestens 2 Urethangruppen im Molekül und Einheiten aus Diisocyanaten und gegebenenfalls geringen Mengen monofunktionellen Isocyanaten sowie Einheiten aus Diolen, vorzugsweise aus Alkylenglykolen und/oder Polyalkylenglykolen vom Molekulargewicht 62 bis 10000 g/mol, und gegebenenfalls geringen Mengen Monohydroxyverbindungen enthält, und auf die Polyalkylenoxidpfropfgrundlage bzw. auf die Polyurethanpfropfgrundlage acetalisierte Vinylalkoholeinheiten enthaltende Polymerreste aufgepfropft sind, dadurch gekennzeichnet, daß die polymeren Acetale, die durch Acetalisierung entsprechender Pfropfpolyvinylalkohole erhalten wurden, Acetalgruppen enthalten, die sich von verätherten ω-Hydroxy(poly)alkoxyalkanalen der Formel I

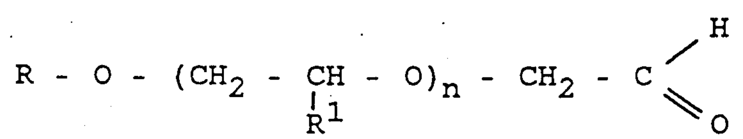

(I)

ableiten, in der

n = eine ganze Zahl von 1 bis 50, vorzugsweise 1 bis 15, insbesondere 1 bis 3, besonders bevorzugt 2,

R = ($C_1$-$C_{20}$)-Alkyl, ($C_6$-$C_{20}$)-Cycloalkyl, -Aryl, -Aralkyl, -Alkaryl, vorzugsweise Benzyl, Phenyl, ein- bis dreifach durch ($C_1$-$C_{12}$)-Alkyl substituiertes Phenyl, vorzugsweise ($C_1$-$C_{14}$)-Alkyl, insbesondere ($C_1$-$C_4$)-Alkyl, besonders bevorzugt Methyl,

$R^1$ = H, $-CH_3$, $-C_2H_5$, vorzugsweise H,

bedeutet.

2. Polymere Acetale nach Anspruch 1, dadurch gekennzeichnet, daß mindestens 1 Mol-% der in dem Ausgangspfropfpolyvinylalkohol vorhandenen Vinylalkoholeinheiten mit Aldehyden der Formel (I) acetalisiert sind.

3. Polymere Acetale nach Anspruch 1 oder 2, dadurch gekennzeichnet, daß sie neben den von Aldehyden der Formel (I) abgeleiteten Acetalgruppen noch andere Acetalgruppen enthalten.

4. Polymere Acetale nach Anspruch 3, dadurch gekennzeichnet, daß sie Acetalgruppen aus aliphatischen ($C_1$-$C_{20}$)-Aldehyden oder Benzaldehyd, die gegebenenfalls durch OH-Gruppen oder Halogenatome substituiert sind, enthalten.

5. Polymere Acetale nach einem oder mehreren der Ansprüche 1 bis 4, dadurch gekennzeichnet, daß höchstens 85 Mol-% der in dem Ausgangspfropfpolyvinylalkohol vorhandenen Vinylalkoholeinheiten acetalisiert sind.

6. Polymere Acetale nach einem oder mehreren der Ansprüche 1 bis 5, dadurch gekennzeichnet, daß in dem acetalisierten Pfropfpolyvinylalkohol der Anteil an Vinylalkoholeinheiten vor der Acetalisierung > 10 Gew.-%, vorzugsweise 15 bis 85, insbesondere 30 bis 80 Gew.-%, bezogen auf den Ausgangspfropfpolyvinylalkohol, betrug.

7. Polymere Acetale nach einem oder mehreren der Ansprüche 1 bis 6, dadurch gekennzeichnet, daß die Polyalkylenoxidpfropfgrundlage bzw. die Polyurethanpfropfgrundlage, auf die die acetalisierten Polyvinylalkoholeinheiten aufgepfropft sind, vor der Pfropfung ein Molekulargewicht zwischen 200 und 50000 g/mol, vorzugsweise > 6000 g/mol, besaß.

8. Polymere Acetale nach einem oder mehreren der Ansprüche 1 bis 7, dadurch gekennzeichnet, daß deren Polyalkylenoxidpfropfgrundlage bzw. deren Polyurethanpfropfgrundlage neben Vinylacetaleinheiten und Vinylalkoholeinheiten noch Monomereinheiten aus Carbonsäurevinylestern mit 3 bis 20 C-Atomen und gegebenenfalls Einheiten aus weiteren ethylenisch ungesättigten und gegebenenfalls verseifungsfähigen Monomeren und/oder deren Verseifungsprodukten aufgepfropft enthält.

9. Polymere Acetale nach einem oder mehreren der Ansprüche 1 bis 8, dadurch gekennzeichnet, daß die Polyurethanpfropfgrundlage Einheiten aus aromatischen und/oder aliphatischen und/oder cycloaliphatischen Diisocyanaten, vorzugsweise Hexamethylendiisocyanat- und/oder Isophorondiisocyanateinheiten; enthält.

10. Polymere Acetale nach einem oder mehreren der Ansprüche 1 bis 8, dadurch gekennzeichnet, daß die Polyalkylenoxidpfropfgrundlage Einheiten aus Ethylenoxid, Propylenoxid, Butylenoxid, vorzugsweise Ethylenoxid, und vorzugsweise Blockcopolymere der genannten ($C_2$-$C_4$)-Alkylenoxide, enthält und das Molekulargewicht der Polyalkylenoxidpfropfgrundlage vor der Pfropfung im Bereich zwischen 600 und 200000 g/mol, vorzugsweise oberhalb von 6000 g/mol, insbesondere oberhalb von 15000 g/mol, lag.

11. Verfahren zur Herstellung von polymeren Acetalen nach Ansprüchen 1 bis 10 durch Umsetzung von auf eine Polyalkylenoxidpfropfgrundlage oder eine Polyurethanpfropfgrundlage aufgepfropften Ausgangspolyvinylalkoholen mit Aldehyden in wäßriger Lösung in Gegenwart eines sauren Katalysators und Isolierung der polymeren Acetale, dadurch gekennzeichnet, daß man, gegebenenfalls unter Inertgasatmosphäre, bei Temperaturen unterhalb der Trübungstemperatur einer vorgelegten und den Säurekatalysator enthaltenden wäßrigen Pfropfpolyvinylalkohollösung die Aldehydkomponente der Formel (I) nach Anspruch 1 sowie gegebenenfalls weitere Aldehydkomponenten nach Maßgabe der Stöchiometrie unter Rühren zutropft, vorzugsweise beginnend bei niedrigen Temperaturen zwischen 0 und 15 °C und allmählicher Temperaturerhöhung auf 25 bis 70 °C, mit 3- bis 5-stündigem Nachrühren unter Acetalisierungsbedingungen bei der erhöhten Temperatur nach Beendigung der Zudosierung, und für den Fall der Herstellung von Mischacetalen, man gegebenenfalls alternativ nach der Umsetzung der Aldehydkomponente der Formel (I) das Reaktionsgemisch erneut auf eine Temperatur zwischen und 0 und 15 °C abkühlt, die weiteren Aldehydkomponenten bei Temperaturen zwischen 0 und 15 °C zudosiert unter allmählicher Temperaturerhöhung auf 25 bis 70 °C mit erneutem 3- bis 5-stündigem Nachrühren unter Acetalisierungsbedingungen bei der erhöhten Temperatur nach Beendigung der Zudosierung, anschließende Neutralisation des Reaktionsgemisches auf pH 7-8 durch Alkalizusatz, Abkühlung auf Raumtemperatur und Isolierung des resultierenden Pfropfpolyvinylacetals, gegebenenfalls vorzugsweise in Pulverform oder in fester kompakter Form oder als Lösung oder vorzugsweise als Dispersion.

**12.** Verwendung von polymeren Acetalen nach einem oder mehreren der Ansprüche 1 bis 10 bzw. hergestellt nach Anspruch 11 als Bestandteil von Beschichtungsmassen für diverse Substrate, vorzugsweise für Glas und Metalle, als Bindemittel für Pigmente, zur Herstellung von Druckfarben, von Schmelzklebern, von lösungsmittelhaltigen oder wäßrigen Klebstoffen, von Beschichtungsmassen und Lackzubereitungen, gegebenenfalls unter Mitverwendung von Vernetzungsmitteln, als Dispergiermittel, als Schlichtemittel und Schmälzmittel in der Textilverarbeitung, für die Verklebung diverser Materialien wie Metalle, keramische Materialien, Kunststoffe, Fasern, Folien, Textilien, Papier, Holz, zur Herstellung von Formkörpern und Folien durch thermoplastische Verformung, als Werkstoff für thermoplastisch verarbeitbare Formkörper und Beschichtungsmassen, als nicht korrosive Beschichtungsmassen für Metalle, als Zwischenlagenfolien bei der Herstellung von Verbundgläsern sowie als Mischungskomponenten bzw. Verschnittkomponenten für übliche Polyvinylacetale.

**Patentansprüche für folgenden Vertragsstaat : ES**

**1.** Verfahren zur Herstellung von polymeren Acetalen von auf eine Polyalkylenoxidpfropfgrundlage oder eine Polyurethanpfropfgrundlage aufgepfropften Polyvinylalkoholen, wobei die Polyurethanpfropfgrundlage mindestens 2 Urethangruppen im Molekül und Einheiten aus Diisocyanaten und gegebenenfalls geringen Mengen monofunktionellen Isocyanaten sowie Einheiten aus Diolen, vorzugsweise aus Alkylenglykolen und/oder Polyalkylenglykolen vom Molekulargewicht 62 bis 10000 g/mol, und gegebenenfalls geringen Mengen Monohydroxyverbindungen enthält, und auf die Polyalkylenoxidpfropfgrundlage bzw. auf die Polyurethanpfropfgrundlage acetalisierte Vinylalkoholeinheiten enthaltende Polymerreste aufgepfropft sind, wobei die polymeren Acetale Acetalgruppen enthalten, die sich von verätherten ω-Hydroxy(poly)alkoxyalkanalen der Formel I

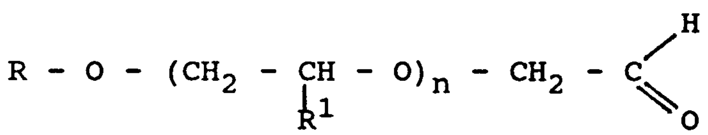

(I)

ableiten, in der

- n = eine ganze Zahl von 1 bis 50, vorzugsweise 1 bis 15, insbesondere 1 bis 3, besonders bevorzugt 2,
- R = $(C_1\text{-}C_{20})$-Alkyl, $(C_6\text{-}C_{20})$-Cycloalkyl, -Aryl, -Aralkyl, -Alkaryl, vorzugsweise Benzyl, Phenyl, ein- bis dreifach durch $(C_1\text{-}C_{12})$-Alkyl substituiertes Phenyl, vorzugsweise $(C_1\text{-}C_{14})$-Alkyl, insbesondere $(C_1\text{-}C_4)$-Alkyl, besonders bevorzugt Methyl,
- $R_1$ = H, $CH_3$, $-C_2H_5$, vorzugsweise H,

bedeutet,

durch Umsetzung von auf eine Polyalkylenoxidpfropfgrundlage oder eine Polyurethanpfropfgrundlage aufgepfropften Ausgangspolyvinylalkoholen mit Aldehyden in wäßriger Lösung in Gegenwart eines sauren Katalysators und Isolierung der polymeren Acetale, dadurch gekennzeichnet, daß man, gegebenenfalls unter Inertgasatmosphäre, bei Temperaturen unterhalb der Trübungstemperatur einer vorgelegten und den Säurekatalysator enthaltenden wäßrigen Pfropfpolyvinylalkohollösung die Aldehydkomponente der Formel I sowie gegebenenfalls weitere Aldehydkomponenten nach Maßgabe der Stöchiometrie unter Rühren zutropft, vorzugsweise beginnend bei niedrigen Temperaturen zwischen 0 und 15 °C und allmählicher Temperaturerhöhung auf 25 bis 70 °C, mit 3- bis 5-stündigem Nachrühren unter Acetalisierungsbedingungen bei der erhöhten Temperatur nach Beendigung der Zudosierung, und für den Fall der Herstellung von Mischacetalen, man gegebenenfalls alternativ nach der Umsetzung der Aldehydkomponente der Formel (I) das Reaktionsgemisch erneut auf eine Temperatur zwischen 0 und 15 °C abkühlt, die weiteren Aldehydkomponenten bei Temperaturen zwischen 0 und 15 °C zudosiert unter allmählicher Temperaturerhöhung auf 25 bis 70 °C mit erneutem 3- bis 5-stündigem Nachrühren unter Acetalisierungsbedingungen bei der erhöhten Temperatur nach Beendigung der Zudosierung, anschließende Neutralisation des Reaktionsgemisches auf pH 7-8 durch Alkalizusatz, Abkühlung auf Raumtemperatur und Isolierung des resultierenden Pfropfpolyvinylacetals, gegebenenfalls vorzugsweise in Pulverform oder in fester kompakter Form oder als Lösung oder vorzugsweise als Dispersion.

2. Verfahren nach Anspruch 1, dadurch gekennzeichnet, daß mindestens 1 Mol-% der in dem Ausgangspfropfpolyvinylalkohol vorhandenen Vinylalkoholeinheiten mit Aldehyden der Formel (I) acetalisiert werden.

3. Verfahren nach Anspruch 1 oder 2, dadurch gekennzeichnet, daß neben Aldehyden der Formel (I) noch andere Aldehyde verwendet werden.

4. Verfahren nach Anspruch 3, dadurch gekennzeichnet, daß aliphatische ($C_1$-$C_{20}$)-Aldehyde oder Benzaldehyd, die gegebenenfalls durch OH-Gruppen oder Halogenatome substituiert sind, verwendet werden.

5. Verfahren nach einem oder mehreren der Ansprüche 1 bis 4, dadurch gekennzeichnet, daß höchstens 85 Mol.-% der in dem Ausgangspfropfpolyvinylalkohol vorhandenen Vinylalkoholeinheiten acetalisiert werden.

6. Verfahren nach einem oder mehreren der Ansprüche 1 bis 5, dadurch gekennzeichnet, daß in dem zu acetalisierenden Pfropfpolyvinylalkohol der Anteil an Vinylalkoholeinheiten vor der Acetalisierung > 10 Gew.-%, vorzugsweise 15 bis 85, insbesondere 30 bis 80 Gew.-%, bezogen auf den Ausgangspfropfpolyvinylalkohol beträgt.

7. Verfahren nach einem oder mehreren der Ansprüche 1 bis 6, dadurch gekennzeichnet, daß die Polyalkylenoxidpfropfgrundlage bzw. die Polyurethanpfropfgrundlage, auf die die zu acetalisierenden Polyvinylalkoholeinheiten aufgepfropft sind, vor der Pfropfung ein Molekulargewicht zwischen 200 und 50000 g/mol, vorzugsweise > 6000 g/mol, besitzen.

8. Verfahren nach einem oder mehreren der Ansprüche 1 bis 7, dadurch gekennzeichnet, daß die Polyalkylenoxidpfropfgrundlage bzw. die Polyurethanpfropfgrundlage neben Vinylacetaleinheiten und Vinylalkoholeinheiten noch Monomereinheiten aus Carbonsäurevinylestern mit 3 bis 20 C-Atomen und gegebenenfalls Einheiten aus weiteren ethylenisch ungesättigten und gegebenenfalls verseifungsfähigen Monomeren und/oder deren Verseifungsprodukten aufgepfropft enthalten.

9. Verfahren nach einem oder mehreren der Ansprüche 1 bis 8, dadurch gekennzeichnet, daß die Polyurethanpfropfgrundlage Einheiten aus aromatischen und/oder aliphatischen und/oder cycloaliphatischen Diisocyanaten, vorzugsweise Hexamethylendiisocyanat- und/oder Isophorondiisocyanateinheiten, enthält.

10. Verfahren nach einem oder mehreren der Ansprüche 1 bis 8, dadurch gekennzeichnet, daß die Polyalkylenoxidpfropfgrundlage Einheiten aus Ethylenoxid, Propylenoxid, Butylenoxid, vorzugsweise Ethylenoxid, und vorzugsweise Blockpolymere der genannten ($C_2$-$C_4$)-Alkylenoxide, enthält und das Molekulargewicht der Polyalkylenoxidpfropfgrundlage vor der Pfropfung im Bereich zwischen 600 und 200000 g/mol, vorzugsweise oberhalb von 6000 g/mol, insbesondere oberhalb von 15000 g/mol, lag.

11. Verwendung von polymeren Acetalen, hergestellt nach einem oder mehreren der Ansprüche 1 bis 10, als Bestandteil von Beschichtungsmassen für diverse Substrate, vorzugsweise für Glas und Metalle, als Bindemittel für Pigmente, zur Herstellung von Druckfarben, von Schmelzklebern, von lösungsmittelhaltigen oder wäßrigen Klebstoffen, von Beschichtungsmassen und Lackzubereitungen, gegebenenfalls unter Mitverwendung von Vernetzungsmitteln, als Dispergiermittel, als Schlichtemittel und Schmälzmittel in der Textilverarbeitung, für die Verklebung diverser Materialien wie Metalle, keramische Materialien, Kunststoffe, Fasern, Folien, Textilien, Papier, Holz, zur Herstellung von Formkörpern und Folien durch thermoplastische Verformung, als Werkstoff für thermoplastisch verarbeitbare Formkörper und Beschichtungsmassen, als nicht korrosive Beschichtungsmassen für Metalle, als Zwischenlagenfolien bei der Herstellung von Verbundgläsern sowie als Mischungskomponenten bzw. Verschnittkomponenten für übliche Polyvinylacetale.